# EUROPEAN PATENT APPLICATION

(11) **EP 2 506 125 A2**
(43) Date of publication of application: **03.10.2012**
(21) Application number: 12159687.8
(22) Date of filing: 15.03.2012
(51) Int. Cl.: G06F 3/033

(54) **Electronic pen, input method using electronic pen, and display device for electronic pen input**

(30) Priority: 30.03.2011 KR 20110028938
(71) Applicant: Samsung Electronics Co., Ltd., Suwon-si, Gyeonggi-do, 443-742 (KR)
(72) Inventor: Lee, Jeong-Seok, Gyeonggi-do 442-742 (KR); Han, Young-Ran, Gyeonggi-do 442-742 (KR); Lee, Sang-Hun, Gyeonggi-do 442-742 (KR); Yun, In-Kuk, Gyeonggi-do 442-742 (KR); Kim, Hyun-Woo, Gyeonggi-do 442-742 (KR)
(74) Representative: Jenkins, Richard Gavin

(57) **Abstract**

A method of inputting a user command on a display using an electronic pen includes emitting light in the direction of the display using a light source of the electronic pen and capturing the display with a camera of the electronic pen. The method includes recognizing a Black Matrix (BM) pattern of the display in the captured image and detecting a location on the display at which the light from the light source is emitted by comparing the recognized BM pattern with pre-stored patterns.

## Description

### BACKGROUND OF THE INVENTION

### 1. Field of the Invention

The present invention relates generally to an input system for use in electronic devices, and more particularly, to an electronic pen, an input method using the electronic pen, and a display device for an electronic pen input.

### 2. Description of the Related Art

In addition to existing input methods such as a keyboard, a keypad, and a mouse, there is increasing use of touch screen input methods allowing users to perform an input by directly touching a screen of a portable electronic device with a finger or a touch pen. These touch screen input methods require a handwriting input or a gesture input on a display. An existing resistive touch input method can allow a fine handwriting input with the use of an input means, such as a stylus pen. However, a capacitive touch input method capable of a multi-touch has mainly been used and causes difficulty in performing a fine input , such as a handwriting input.

One touch screen input method is an input method using an electronic pen for performing an input by recognizing patterns pre-defmed on a display. The input method recognizes a pattern formed on a display with the use of an electronic pen having a camera, detects a location of the electronic pen based on the recognized pattern, and performs an input depending on the detected location. In the input method, a display formed in an area indicated by an electronic pen is captured with a camera. The camera captures a pen head direction of the electronic pen, and recognizes a location or command indicated by the electronic pen by detecting a predetermined pattern in the captured image.

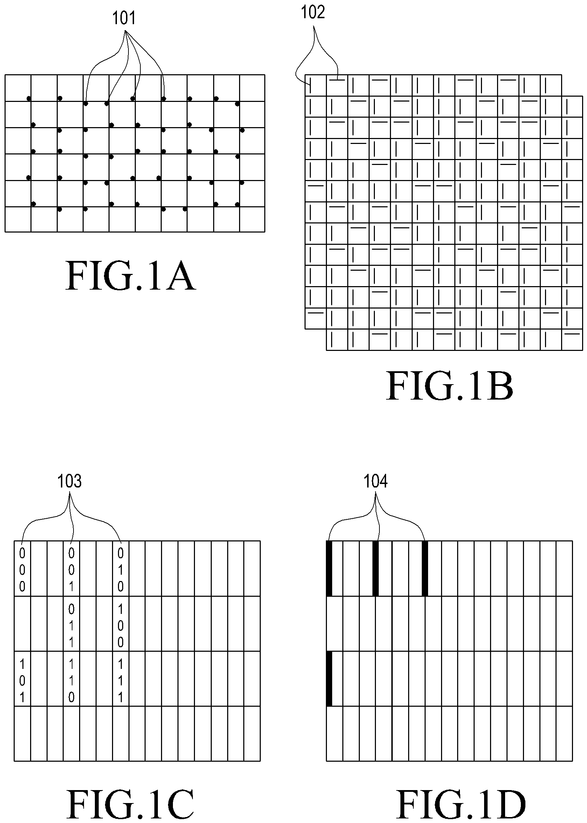

FIGs. 1A to 1D illustrate patterns formed on a display for an electronic pen input method. Various patterns have been used to perform the electronic pen input method using pattern recognition. FIG. 1A illustrates a pattern formed by arranging circles 101 in a predetermined form on digital paper with pigments absorbing Infrared (IR) rays. When digital paper is used, an electronic pen cannot be used on a surface except for the digital paper on which a pattern is printed. FIG. 1B illustrates a pattern 102 formed by arranging direct lines in a vertical or horizontal direction on digital paper, printed on a transparent film, and used by attaching the transparent film to a display surface. There are disadvantages in using the transparent film in that a display panel becomes thick and brightness of a display decreases. Additionally, when a material reflecting IR rays is used instead of IR absorption pigments in pattern production of digital paper, a contrast ratio of the display may also decrease in addition to the decrease of brightness.

FIG. 1C illustrates a pattern formed for each pixel by modifying Liquid Crystal Display (LCD) pixels and adding a predetermined pattern 103 formed with numerals to sub-pixels of each pixel. FIG. 1D illustrates a pattern 104 recognizable by a camera printed on a Black Matrix (BM) of a display. However, since pixels of a display are used in the method shown in FIG. 1C using sub-pixels of the display, both brightness and definition may decrease, thereby causing a decrease in performance of the display. Additionally, since printing a pattern on a BM requires a separate process for pattern printing in the method shown in FIG. 1D, a precise arrangement technique for forming a pattern on a narrow BM is required.

### SUMMARY OF THE INVENTION

Accordingly, the present invention has been made to solve the abovestated problems occurring in the prior art, and the present invention provides a display apparatus using an electronic pen input without adding a separate process or part for forming a pattern, which leads to deterioration in brightness or contrast ratio of a display.

According to an embodiment of the present invention, a method of inputting a user command on a display using an electronic pen is provided. The method includes emitting light in a display direction using a light source of the electronic pen and capturing the display with a camera of the electronic pen. The method includes recognizing a Black Matrix (BM) pattern of the display in the captured image and detecting a location on the display at which the light from the light source is emitted by comparing the recognized BM pattern with pre-stored patterns.

According to an embodiment of the present invention, an electronic pen for inputting a user command on a display is provided. The electronic pen includes a light source for emitting light in a display direction, a camera for capturing the display and a communication unit for communicating with an electronic device for controlling the display. The electronic pen includes a controller for recognizing a Black Matrix (BM) pattern of the display in an image captured by the camera and detecting a location on the display at which the light from the light source is emitted by comparing the recognized BM pattern with pre-stored patterns.

According to an embodiment of the present invention, a display for inputting a user command using an electronic pen is provided. The display includes a color filter formed for each pixel of the display and a Black Matrix (BM), which to forms a boundary of sub-pixels of each pixel and forms a predetermined pattern for each area of the display by modifying a shape of at least one portion of the boundary.

According to an embodiment of the present invention, an electronic pen for inputting a user command on a display is provided. The electronic pen includes a light source for emitting light in a display direction, a camera for capturing the display and a communication unit for communicating with an electronic device for controlling the display. The electronic pen includes a controller for recognizing a Black Matrix (BM) pattern of the display in an image captured by the camera and transmitting the recognized BM pattern to the electronic device via the communication unit, wherein the electronic device detects a location on the display at which the light from the light source is emitted by comparing the recognized BM pattern with pre-stored patterns.

### BRIEF DESCRIPTION OF THE DRAWINGS

The above and other objects, features and advantages of the present invention will become more apparent from the following detailed description when taken in conjunction with the accompanying drawing in which:
FIGs. 1A to 1D illustrate examples of patterns formed on a display for a conventional electronic pen input method;
FIG. 2 illustrates a cross-sectional view of a display according to an embodiment of the present invention;
FIG. 3 is a conceptual diagram illustrating an electronic pen input system according to an embodiment of the present invention;
FIG. 4 illustrates a Black Matrix (BM) pattern of a display in the electronic pen input system according to an embodiment of the present invention;
FIGs. 5A to 5D illustrate a BM pattern of the display in the electronic pen input system according to an embodiment of the present invention;
FIG. 6 is a flowchart illustrating an operation of an electronic pen in an electronic pen input operation according to an embodiment of the present invention; and
FIG. 7 is a block diagram illustrating an electronic pen according to an embodiment of the present invention.

### DETAILED DESCRIPTION OF EMBODIMENTS OF THE PRESENT INVENTION

Embodiments of the present invention will be described herein below with reference to the accompanying drawings. In the following description, although many specific items are shown and described, they are only provided to help general understanding of the present invention, and it will be understood by those of ordinary skill in the art that these specific items can be modified or changed within the spirit and scope of the present invention. In the following description and the accompanying drawings, well-known functions or constructions are not described in detail since they would obscure the invention with unnecessary detail.

An input method using an electronic pen is provided herein, which may be used in electronic devices having a display screen, such as mobile phones, Personal Computers (PCs), electronic board, tablet computers, and electronic books. The input method may be used as an electronic pen input method for performing an input by detecting an input location of the electronic pen by recognizing a pattern formed by changing a form of a Black Matrix (BM) on a display, such as an Liquid Crystal Display (LCD), a Plasma Display Panel (PDP), an Active-Matrix Organic Light Emitting Diode (AMOLED) display, or an electronic paper.

Accordingly, an electronic pen for detecting a pattern formed on a BM of a display via a camera and interpreting an input location and gesture information based on the detected pattern and a display including a BM formed in a predetermined pattern is provided.

A display to which the embodiments of the present invention are applied have the same structure as existing displays. That is, the present invention is applicable to various types of displays including an LCD, a PDP, an Organic Light-Emitting Display (OLED), or an electronic paper.

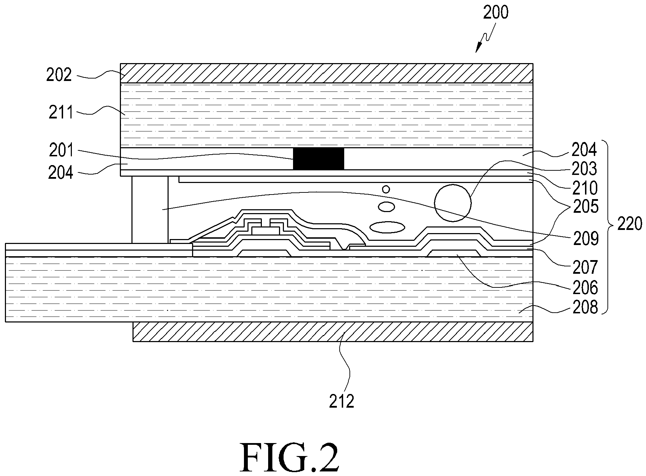

FIG. 2 illustrates a cross-sectional view of a liquid crystal panel 200 of a display according to an embodiment of the present invention.

A front polarizing plate 202 is disposed on the front surface of the liquid crystal panel 200, a color filter substrate 211 is disposed below the front polarizing plate 202, and a BM 201 and a color filter 204 are disposed below the color filter substrate 211.

A Thin Film Transistor (TFT) substrate 220 is disposed below the BM 201 and the color filter 204. As shown in FIG. 2, the TFT substrate 220 is formed by including a common electrode (Indium and Tin Oxide compound (ITO)) 210 and a pixel electrode (ITO) 207 and a TFT-array substrate 208 and two confronting films 205, a spacer 203, and a sealant 209 between the common electrode 210 and the pixel electrode 207, and a Storage Capacitor (SC) 206 and the TFT-array substrate 208. A rear polarizing plate 212 is disposed below the TFT-array substrate 208

According to an embodiment of the present invention, the BM 201 indicates a boundary between color filters 204 and includes a material or structure capable of absorbing or selectively reflecting light. If a light source of an electronic pen emits Infrared (IR) rays, the BM 201 may be formed with an IR absorption body, such as carbon black. According to an embodiment of the present invention, a predetermined pattern is formed by modifying a format of the BM 201.

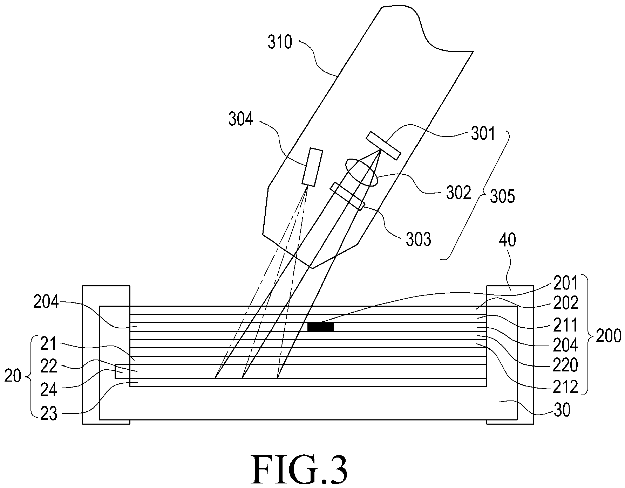

FIG. 3 is a diagram illustrating an electronic pen input system according to an embodiment of the present invention. An electronic pen 310 includes a light source 304 and a camera 305 capable of capturing an image in a pen head 311 direction, i.e., a display direction. The camera 305 includes an image sensor 301, a lens 302, and an optical filter 303

A display includes an LCD module, which includes a liquid crystal panel 200 including a front polarizing plate 202, a TFT substrate 220, a color filter substrate 211, the BM 201, the color filter 204 , and a rear polarizing plate 212. A backlight assembly 20 includes optical sheets 21, a light guide plate 22, a reflection sheet 23, and a lamp unit 24. A mold frame 30 supports the liquid crystal panel 200 and the backlight assembly 20, and a metal bracket 40 embraces an outer circumference of the mold frame 30. The liquid crystal panel 200 includes liquid crystal cells arranged in a matrix form, each liquid crystal cell forming a pixel unit. The liquid crystal panel 200 forms an image by adjusting a light transmissivity of the liquid crystal cells based on image signal information received from a controller (not shown).

The backlight assembly 20 includes the light guide plate 22 arranged in parallel to the rear surface of the liquid crystal panel 200. The lamp unit 24 is arranged along at least one side of the light guide plate 22 to supply light. The optical sheets 21 are arranged on the front surface of the light guide plate 22 to diffuse the light directed to the liquid crystal panel 200 and to collect the light directed to the liquid crystal panel 200. The reflection sheet 23 is arranged below the rear surface of the light guide plate 22.

Detection of an input location of the electronic pen 310 on the display is provided according to an embodiment of the present invention. The camera 305 of the electronic pen 310 captures light emitted by the light source 304 in the direction of the display. The camera 305 of the electronic pen 310 is fixedly assembled with the electronic pen 310 to capture an image in the display direction.

Each BM 201 of the display includes a material or structure absorbing light emitted by the light source 304 of the electronic pen 310, and when the light source 304 emits light towards the display and capturing is performed by the camera 305, a portion corresponding to each BM 201 absorbs the light, so an image in which BM 201 portions are represented in black is captured.

The captured image is processed by a controller (not shown) of the electronic pen 310 or another electronic device (not shown) communicating with the electronic pen 310, and the controller detects a pattern formed due to the BMs. Since the detected pattern is one of patterns pre-defmed between the display and the electronic pen 310 or another electronic device (not shown) communicating with the electronic pen 310 or pre-stored in the electronic pen 310 or another electronic device (not shown) communicating with the electronic pen 310, it can be known based on the detected pattern which area on the display the captured image belongs to. Additionally, a pre-set command may be extracted based on the detected pattern. The controller may detect which one of the pre-stored patterns the detected pattern corresponds to by comparing the detected pattern with the pre-stored patterns.

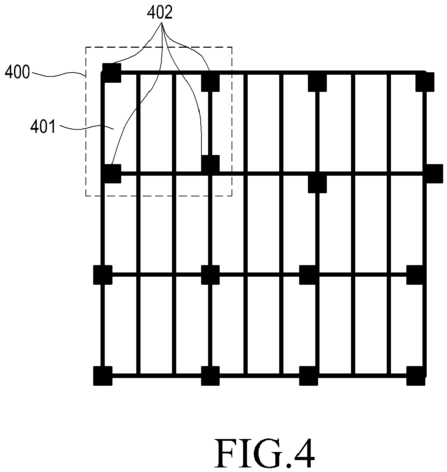

FIG. 4 illustrates a BM pattern of a display in the electronic pen input system according to an embodiment of the present invention. As shown in FIG. 4, the BM pattern 402 of the display is formed by overlapping a pattern of a pre-set shape with a corner of a quadrangle forming a boundary of pixel 400 including at least one of sub-pixel 401 of a color filter

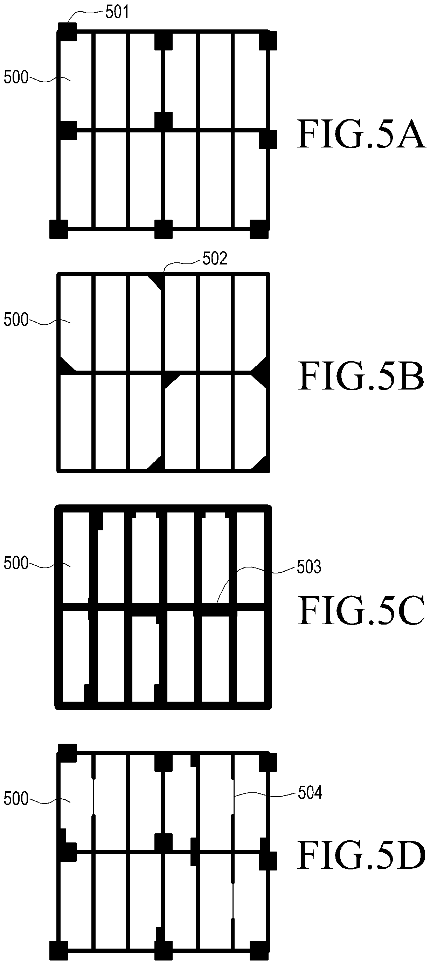

FIGs. 5A to 5D illustrate a BM pattern of the display in the electronic pen input system according to an embodiment of the present invention. A pattern is formed by changing a shape of a BM 501∼504 forming a boundary between sub-pixels 500 on the display, and the BM pattern of each area may be used as information. FIGs. 5A to 5D show various forms of patterns usable according to an embodiment of the present invention. Each BM pattern 501∼504 is formed with an appropriate size and form by considering an aperture ratio of the display and an optical system of an electronic pen.
FIGs. 5A and 5B illustrate a BM pattern formed by arranging a quadrangle pattern 501 and a triangle pattern 502 at the top, bottom, left, or right of each intersection of pixels, respectively. FIG. 5C illustrates a pattern formed by adjusting a width of a BM line 503 between every two sub-pixels instead of arranging a separate figure shape at each intersection of pixels. FIG. 5D shows a pattern format 504 for compensating for an aperture ratio by making some of the BM lines narrow to prevent the aperture ratio of the display from decreasing in the BM format of FIG. 5A. As shown in FIGs. 5A to 5D, according to an embodiment of the present invention, since a pattern is formed by changing a BM format used in existing displays, the present invention is applicable to all display methods using a BM.

To determine an input location by recognizing a BM pattern, a pattern recognized from a specific BM area captured by a camera of an electronic pen is preferably a unique pattern. Accordingly, each BM pattern is preferably not duplicated in all areas recognized by the camera. Thus, a BM pattern formed for each pixel may have a different shape, or may be formed to have a different pattern for each pixel group having a regular quadrilateral, which is formed by a specific number of pixels, according to a BM area size recognizable by a camera.

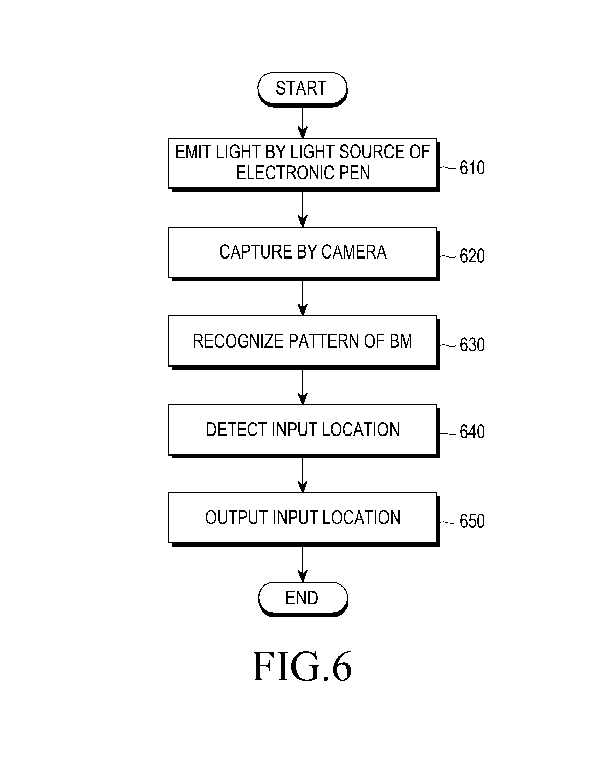

FIG. 6 is a flowchart illustrating an operation of an electronic pen in an electronic pen input operation according to an embodiment of the present invention. Referring to FIG. 6, in step 610, the electronic pen emits light by means of a light source. According to an embodiment of the present invention, a light source emitting IR rays emits the IR rays in the pen head 511 direction, i.e., the display direction. The light may be emitted by a switch or button included in the electronic pen. In step 620, a camera of the electronic pen captures an image in the display direction. In step 630, a BM pattern is recognized from a captured image by processing the captured image. In step 640, an input location of the electronic pen is detected by comparing the recognized BM pattern with all predefined BM patterns and determining to which area of an overall image the recognized BM pattern corresponds. Additionally, a pre-defmed command may be detected by determining whether the pre-defmed command is set to the recognized BM pattern. In step 650, the input location detected in step 640 is output. When the pre-defmed command is detected, the detected command is output.

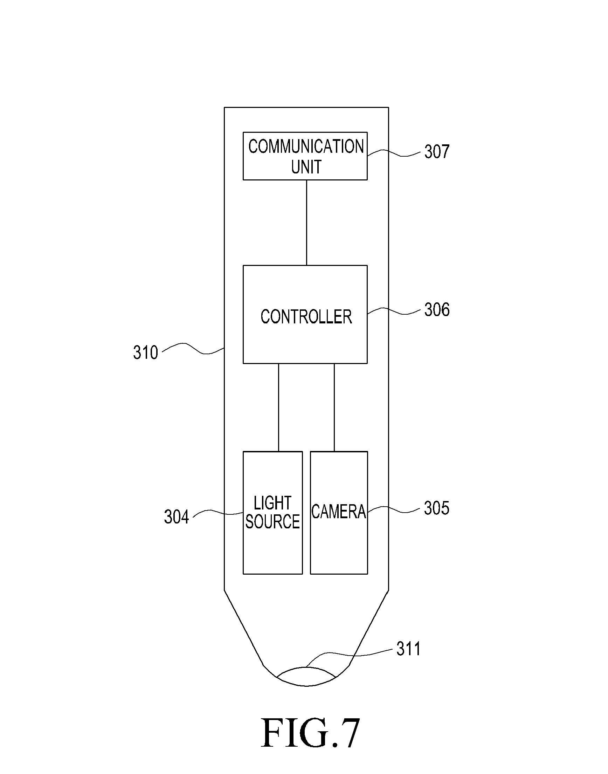

FIG. 7 is a block diagram of the electronic pen 310 according to an embodiment of the present invention. Referring to FIG. 7, the electronic pen 310 includes a communication unit 307, a controller 306, the light source 304, and the camera 305.

The communication unit 307 communicates with an external electronic device. The external electronic device indicates a device using an input signal of the electronic pen 310, i.e., a device to which the input signal is input or a device for controlling a display. Accordingly, the external electronic device may be an electronic device including a display, such as a mobile phone, a smartphone, a Portable Multimedia Player (PMP), a tablet computer, a desktop computer, or a notebook computer.

According to an embodiment of the present invention, the communication unit 307 may transmit and receive data to/from the external electronic device in accordance with a short-range wireless communication technique such as Bluetooth and Zigbee, or a general wired communication technique.

Additionally, the communication unit 307 may transmit an image captured by the camera 305 or a BM pattern detected from the captured image by the controller 306 to the external electronic device. When an input location is detected using the BM pattern detected by the controller 306, the communication unit 307 may transmit information regarding the detected input location to the external electronic device.

The light source 304 emits light in a direction of a pen head 511 of the electronic pen 310. Specifically, when a user performs an input on a display using the electronic pen 310 held in a hand, the light source 304 of the electronic pen 310 emits light in a direction of the display on which the input is performed. The light source 304 may emit IR rays according to an embodiment of the present invention.

The camera 305 captures an image directed towards the pen head 511 of the electronic pen 310. That is, the camera 305 captures a display area directed by the electronic pen 310.

The controller 306 controls components of the electronic pen 310.

According to an embodiment of the present invention, the controller 306 may detect a BM pattern from an image captured by the camera 305. Additionally, the controller 306 may detect an input location of the electronic pen 310 by detecting a BM pattern from an image captured by the camera 305 and comparing the detected BM pattern with BM patterns of the display, which are pre-stored in a memory (not shown).

According to an embodiment of the present invention, the operation of detecting a BM pattern in an image may be performed by the controller 306 of the electronic pen 310 or by the external electronic device.

As is apparent from the foregoing description, embodiments of the present invention provide an advantage in that an increase in thickness of a display or a decrease in performance of the display does not occur due to modification of BM formats used in the display without adding a separate process or layer in an existing display manufacturing process.

According to an embodiment of the present invention, when an electronic pen input method using pattern recognition is implemented, a display apparatus for an electronic pen input may be implemented without adding a separate process or part for forming a pattern, and expected deterioration in brightness or contrast ratio of a display may be minimized.

While the invention has been shown and described with reference to certain embodiments of the present invention it will be understood by those skilled in the art that various changes in form and details may be made therein without departing from the spirit and scope of the invention as defined by the appended claims and their equivalents.

## Claims

1. A method of inputting a user command on a display using an electronic pen, comprising:
emitting light in a direction of the display using a light source of the electronic pen;
capturing the display with a camera of the electronic pen;
recognizing a Black Matrix (BM) pattern of the display in the captured image; and
detecting a location on the display at which the light from the light source is emitted, by comparing the recognized BM pattern with pre-stored patterns.

2. The method of claim 1, wherein the BM pattern is formed so that at least one corner of a quadrangle forming a boundary of sub-pixels of the display in the BM has a shape of a pre-set figure.

3. The method of claim 1, wherein the BM pattern is formed by modifying a width of at least one line forming a boundary of sub-pixels of the display in the BM.

4. The method of claim 1, wherein the light emitted from the light source is Infrared (IR) rays.

5. The method of claim 4, wherein the BM includes carbon black.

6. An electronic pen for inputting a user command on a display, comprising:
a light source for emitting light in a direction of the display;
a camera for capturing the display;
a communication unit for communicating with an electronic device for controlling the display; and
a controller for recognizing a Black Matrix (BM) pattern of the display in an image captured by the camera and detecting a location on the display at which the light from the light source is emitted by comparing the recognized BM pattern with pre-stored patterns.

7. The electronic pen of claim 6, wherein the BM pattern is formed so that at least one corner of a quadrangle forming a boundary of sub-pixels of the display in the BM has a shape of a pre-set figure.

8. The electronic pen of claim 6, wherein the BM pattern is formed by modifying a width of at least one line forming a boundary of sub-pixels of the display in the BM.

9. The electronic pen of claim 6, wherein the light emitted from the light source is Infrared (IR) rays.

10. A display for inputting a user command using an electronic pen, comprising:
a color filter formed for each pixel of the display; and
a Black Matrix (BM), which forms a boundary of sub-pixels of each pixel and forms a predetermined pattern for each area of the display by modifying a shape of at least one portion of the boundary.

11. The display of claim 10, wherein a pattern of the BM is formed so that at least one corner of a quadrangle forming a boundary of sub-pixels of the display in the BM has a shape of a pre-set figure.

12. The display of claim 10, wherein a pattern of the BM is formed by modifying a width of at least one line forming a boundary of sub-pixels of the display in the BM.

13. The display of claim 10, wherein the BM includes carbon black.

14. An electronic pen for inputting a user command on a display, comprising:
a light source for emitting light in a direction of the display;
a camera for capturing the display;
a communication unit for communicating with an electronic device for controlling the display; and
a controller for recognizing a Black Matrix (BM) pattern of the display in an image captured by the camera and transmitting the recognized BM pattern to the electronic device via the communication unit,
wherein the electronic device detects a location on the display at which the light from the light source is emitted by comparing the recognized BM pattern with pre-stored patterns.
